# EUROPÄISCHE PATENTSCHRIFT

(11) **EP 3 234 485 B1**
(45) Veröffentlichungstag und Bekanntmachung des Hinweises auf die Patenterteilung: **30.08.2023**
(21) Anmeldenummer: 15820461.0
(22) Anmeldetag: 16.12.2015
(51) Int. Cl.: F25D 3/12, C01B 32/55

(54) **VERFAHREN UND VORRICHTUNG ZUM ERZEUGEN VON UNTERKÜHLTEM KOHLENDIOXIDSCHNEE**
METHOD AND APPARATUS FOR PRODUCING SUBCOOLED CARBON DIOXIDE SNOW
PROCÉDÉ ET DISPOSITIF POUR PRODUIRE DE LA NEIGE CARBONIQUE SOUS-REFROIRDIE

(30) Priorität: 18.12.2014 DE 102014018981
(43) Veröffentlichungstag der Anmeldung: 25.10.2017
(73) Patentinhaber: Messer SE & Co. KGaA, 65812 Bad Soden (DE); Messer France S.A.S., 92156 Suresnes Cedex (FR)
(72) Erfinder: TEBIB, Emir, 60330 Le Plessis Belleville (FR); GOCKEL, Frank, 42553 Velbert (DE)
(74) Vertreter: Münzel, Joachim R.
(86) Internationale Anmeldenummer: PCT/EP2015/080047
(87) Internationale Veröffentlichungsnummer: WO 2016/097018

(56) Entgegenhaltungen:
- DE-A1-102012 008 593
- DE-U- 7 439 472
- JP-A- 2001 072 405
- JP-U- S 517 446
- JP-U- S5 787 028
- JP-U- S51 105 055

## Beschreibung

Die Erfindung betrifft ein Verfahren zur Erzeugung von unterkühltem Kohlendioxidschnee gemäß dem Oberbegriff des Patentanspruchs 1.

Die Erfindung betrifft des Weiteren eine Vorrichtung zur Durchführung eines solchen Verfahrens.

Bei üblichen Einrichtungen zum Erzeugen von Trockeneisteilchen wird flüssiges Kohlendioxid unter einem Druck von 5,18 bar abs. und einer der Umgebungstemperatur entsprechenden Temperatur herangeführt und an einer Düse, der sogenannten Entspannungsdüse, entspannt. Bei der Entspannung auf Atmosphärendruck (1 bar) kühlt sich das Kohlendioxid auf eine Temperatur von minus 78,9°C (194 K) ab, wobei ein Gemisch aus Kohlendioxidschnee und kaltem Kohlendioxidgas entsteht. Zumindest die Kohlendioxidpartikel werden anschließend zum Kühlen von Produkten eingesetzt und beispielsweise auf die Oberfläche eines zu kühlenden Produkts aufgetragen. Aufgrund seiner Ungiftigkeit, seiner inerten Eigenschaften und des Umstands, dass es bei Erwärmung rückstandsfrei sublimiert, eignet sich Kohlendioxidschnee insbesondere zum Kühlen von Lebensmittelprodukten. Dazu wird beispielsweise Kohlendioxidschnee auf die Oberfläche eines zu kühlenden Produkts aufgetragen oder - im Falle eines flüssigen, pastösen oder pulvrigen Produkts - in das Produkt eingemischt.

Bei der Entspannung des flüssigen Kohlendioxids mittels sogenannte Schneehörner besteht das Problem, dass infolge der raschen Expansion des entstehenden Gas-Feststoff-Gemisches starke turbulente Strömungen entstehen, die dazu führen, dass ein nicht unwesentlicher Teil des Kohlendioxidschnees vom Gasstrom mitgerissen wird, wodurch die Ausbeute an festem Kohlendioxid vermindert wird.

Aus der JP S57 87028 U ist ein derartiges Schneehorn bekannt, bei dem mittels eines konisch sich verjüngenden Vorderabschnitts versucht wird, den Kohlendioxidschnee auf eine begrenzte Austrittsfläche zu bündeln, während gleichzeitig das Kohlendioxidgas über eine rückwärtige Absaugöffnung abgezogen wird. Aufgrund der genannten turbulenten Strömungen findet jedoch auch hier nur eine unzureichende Trennung von Kohlendioxidschnee und Kohlendioxidgas statt.

Um diesem Problem entgegenzuwirken wird in der DE 7439472 U vorgeschlagen, flüssiges Kohlendioxid an zwei gegenläufigen Entspannungsdüsen in einen Zyklon einzutragen. Bei der Entspannung des Kohlendioxids bilden sich innerhalb des Zyklons zwei gegenläufige Strömungen aus, die dazu führen, dass die jeweils in den Strömungen mitgeführten Kohlendioxidpartikel aufeinanderprallen, dabei abgebremst werden und anschließend aus dem Zyklon abgezogen werden. In dieser Druckschrift wird allerdings kein Unterkühlungseffekt beschrieben.

Weiterhin sind aus der JP S51 7446 U und der JP S51 105055 U Vorrichtungen zur Erzeugung von Kohlendioxidschnee bekannt, bei denen flüssiges Kohlendioxid tangential in einen Zyklon eingespeist wird, wobei es zu einem Gemisch aus Kohlendioxidschnee und Kohlendioxidgas entspannt. Während der Kohlendioxidschnee aus einer bodenseitigen Öffnung des Zyklons ausgestoßen wird, wird das Kohlendioxidgas über ein Gebläse abgesaugt. Die Erzeugung von unterkühltem Kohlendioxid wird auch in diesen Druckschriften nicht offenbart.

Da sich der bei der Entspannung von flüssigem Kohlendioxid erzeugte Kohlendioxidschnee bei Wärmeeintrag d.h. im Energieaustausch mit einem wärmeren Produkt entlang der Sublimationskurve bewegt, sublimiert ein Teil des festen Kohlendioxids bereits unmittelbar nach dem Auftragen auf ein zu kühlendes Produkt. Das dabei entstehende gasförmige Kohlendioxid kann, ähnlich dem von siedenden Flüssigkeiten her bekannten Leidenfrost-Effekt, ein Gaspolster zwischen Kohlendioxidschnee und Produkt bilden und dadurch die Effektivität der Kühlung mindern. Um eine gute Kältewirkung zu entfalten, wird daher eine möglichst lange Kontaktzeit zwischen Kohlendioxidpartikel und Produkt angestrebt. Dies gelingt durch den Einsatz von unterkühltem Kohlendioxidschnee.

Da die Temperatur des bei konventionellen Schneehörnern entstehenden Kohlendioxidschnees stets der Sublimationstemperatur von -78,9°C (194K) entspricht, wird zur Herstellung von unterkühltem Kohlendioxidschnee üblicherweise festes Kohlendioxid mit einem kälteren Medium, beispielsweise flüssiger Stickstoff oder ein flüssiges Edelgas, in Kontakt gebracht und auf die gewünschte Temperatur gekühlt, was allerdings die zusätzliche Bereitstellung von Kühlmedium erfordert.

So ist aus der DE 10 2012 008 593 A1 eine Vorrichtung zum Kühlen von Produkten bekannt, bei dem ein durch Entspannung von flüssigem Kohlendioxid erzeugter Kohlendioxidschnee mit flüssigem Stickstoff durchmischt und dadurch unterkühlt wird. Die gleichzeitige Zuführung von flüssigem Kohlendioxid und flüssigem Stickstoff ist jedoch mit einem erheblichen logistischen Aufwand verbunden.

In der EP 2 656 741 A2 vorgeschlagen, flüssiges Kohlendioxid und ein Kühlmedium, beispielsweise flüssiger Stickstoff, an einer Zweistoffdüse gleichzeitig in einen Zyklon einzutragen. Durch die spiralförmigen Strömungen innerhalb des Zyklons kommt es zu einer innigen Durchmischung von Kohlendioxid und Kühlmedium und damit auch zu einer Unterkühlung der festen Kohlendioxidpartikel, die anschließend am Produktaustritt des Zyklons aufgefangen werden. Diese Vorrichtung ist geeignet, sehr schnell unterkühlte Kohlendioxidschneepartikel zu erzeugen, sie erfordert jedoch ebenfalls die separate Bereitstellung von Kohlendioxid und Kühlmedium.

Der Erfindung liegt daher die Aufgabe zu Grunde, eine effiziente und einfach zu handhabende Möglichkeit zum Herstellen von unterkühltem Kohlendioxid anzugeben, die ohne Einsatz zusätzlicher Kühlmedien auskommt.

Gelöst ist diese Aufgabe durch ein Verfahren mit den Merkmalen des Patentanspruchs 1 und durch eine für die Durchführung des erfindungsgemäßen Verfahrens bestimme Vorrichtung mit den Merkmalen des Patentanspruchs 4. Vorteilhafte Ausführungsformen sind in den Unteransprüchen angegeben.

Wesentlich für das erfindungsgemäße Verfahren ist also, dass durch eine Strömung, die bei der Entspannung des erfindungsgemäß bei einem Druck von 10bar und mehr herangeführten flüssigen Kohlendioxids erzeugt wird, im Bereich der Entspannungsdüse ein Unterdruck erzeugt wird, in den hinein das flüssige Kohlendioxid entspannt wird. Als "Unterdruck" soll hier ein Druckwert unterhalb des Drucks verstanden werden, der außerhalb der Entspannungskammer herrscht (Umgebungsdruck); beispielweise entspricht der Umgebungsdruck dem Atmosphärendruck (ca. 1 bar). Der Unterdruck führt zu einer gegenüber der Entspannung bei Umgebungsdruck erniedrigten Temperatur des erzeugten Kohlendioxidschnees. Der bei der Entspannung erzeugte Strom aus Kohlendioxidschnee und Kohlendioxidgas wird dabei mit einer möglichst hohen Geschwindigkeit aus dem Bereich der Entspannungsdüse abgeleitet, damit nach dem Gesetz von Bernoulli im Bereich der Mündung der Entspannungsdüse ein Bereich mit Unterdruck entsteht. Dies führt dazu, dass das nachfolgend in diesen Bereich entspannte Kohlendioxid auf eine gegenüber der Entspannung auf Umgebungsdruck tiefere Endtemperatur entspannt wird. Das erfindungsgemäße Verfahren sorgt somit für einer "Unterkühlung" des Kohlendioxidschnees. Bei der Entspannungskammer handelt es sich um einen gegenüber der Umgebung teilweise abgeschlossenen Raum, bei dem der Zustrom von Umgebungsatmosphäre derart reduziert ist, dass sich während der Entspannung des Kohlendioxids ein stationärer Bereich mit Unterdruck um den Bereich der Entspannungsdüse herum ausbildet. Beispielsweise handelt es sich bei der Entspannungskammer um den Ringraum im Bereich des Tauchrohrs eines Zyklons.

Erfindungsgemäß wird der Druck aufgrund der Strömung des erzeugten Kohlendioxidgases im Bereich der Entspannungsdüse dabei auf Werte unter 0,9 bar (absolut), bevorzugt auf unter 0,6 bar (absolut) und besonders bevorzugt unter 0,1 bar (absolut) abgesenkt, wodurch das entspannte Kohlendioxid eine Temperatur von weniger als -85°C (188,15 K) bzw. weniger als -105°C (168,15 K) aufweist.

Eine erfindungsgemäße Vorrichtung zur Durchführung des erfindungsgemäßen Verfahrens weist die Merkmale des Patentanspruchs 4 auf. Die Vorrichtung umfasst einen Zyklon, der einen kreiszylinderförmigen Hinterabschnitt und einen sich daran anschließenden, kegelstumpfförmigen Vorderabschnitt aufweist, wobei auf der vom Vorderabschnitt entgegengesetzten Stirnseite des Hinterabschnitts ein Boden mit einer durch diesen konzentrisch hindurchgeführten, im Innern des Zyklons beabstandet vom Boden mit einer kreisförmigen Gasaustrittsöffnung ausmündenden Gasabzugsleitung (auch Tauchrohr genannt) angeordnet ist, und der Vorderabschnitt auf seiner vom Hinterabschnitt abgewandten Stirnseite in einer konzentrisch angeordneten Schneeaustrittsöffnung ausmündet. Die Vorrichtung umfasst des Weiteren eine an einer Druckleitung für flüssiges Kohlendioxid angeschlossene Kohlendioxid-Entspannungsdüse, die tangential in den Hinterabschnitt im Bereich der oberen Stirnseite einmündet und die erfindungsgemäß dadurch gekennzeichnet ist, dass der Durchmesser der Gasaustrittsöffnung kleiner als der Innendurchmesser des Hinterabschnitts, jedoch größer als der Durchmesser der Schneeaustrittsöffnung ist.

Es hat sich überraschend gezeigt, dass der mit der erfindungsgemäßen Vorrichtung hergestellte Kohlendioxidschnee eine Temperatur aufweist, die deutlich unter der Sublimationstemperatur des Kohlendioxids bei Atmosphärendruck liegt und beispielsweise zwischen minus 85°C und minus 105°C beträgt. Gleichzeitig ist die Temperatur des erzeugten Kohlendioxidgases gegenüber der Sublimationstemperatur des Kohlendioxids deutlich erhöht und liegt zwischen minus 35°C und minus 45°C. Zur Herstellung dieses unterkühlten Kohlendioxidschnees unter Verwendung der erfindungsgemäßen Vorrichtung bedarf es lediglich der tangentialen Zuführung von flüssigem Kohlendioxid über die Entspannungsdüse der erfindungsgemäßen Vorrichtung, wobei der Druck des zugeführten flüssigen Kohlendioxids erfindungsgemäß mindestens 10 bar, besonders bevorzugt mindestens 18 bar beträgt und die Entspannungsdüse bevorzugt einen Innendurchmesser zwischen 1 mm und 4 mm aufweist. Ein zusätzliches Kühlmedium ist nicht erforderlich.

Als "tangentiale Einmündung" der Kohlendioxid-Entspannungsdüse in den Hinterabschnitt des Zyklons soll hier ein Aufbau verstanden werden, bei dem die Kohlendioxid-Entspannungsdüse eine Düsenöffnung aufweist, die stirnseitig an einem tangential in den Hinterabschnitt des Zyklons einmündenden Endabschnitt der Druckleitung angeordnet ist. Auf diese Weise wird im Hinterabschnitt des Zyklons bei der Entspannung des Kohlendioxids ein starker und schneller Kohlendioxidstrom erzeugt.

Der mit hoher Geschwindigkeit erfolgende tangentiale Eintrag des Kohlendioxids in den Ringraum zwischen der in den Hinterabschnitt des Zyklons hineinragenden Gasabzugsleitung und der Innenwand des Hinterabschnitts führt nach dem Bernoulli-Effekt zu einer Zone verminderten Drucks im Umgebungsbereich des Eintrags. Das nachfolgend zuströmende flüssige Kohlendioxid entspannt also auf einen gegenüber dem Umgebungsdruck erniedrigten Druck. Dies ist jedoch nur dann der Fall, wenn der Zyklon so ausgestaltet ist, dass das erzeugte Kohlendioxidgas sehr rasch aus dem Zyklon abgezogen wird und sich nicht innerhalb des Zyklons aufstaut. Wesentlich für den Unterkühlungseffekt ist daher, dass der Innenradius der Gasaustrittsöffnung größer als der Innenradius der Schneeaustrittsöffnung ist und dass das Kohlendioxid mit einem hohen Druck von erfindungsgemäß 10 bar und mehr zur Entspannungsdüse geführt wird. Die Erfindung sieht vor, dass der Durchmesser der Gasaustrittsöffnung mindestens 5%, bevorzugt mindestens 10% größer als der Durchmesser der Schneeaustrittsöffnung ist.

Eine besonders vorteilhafte Ausgestaltung der Erfindung sieht vor, dass sich an den kegelstumpfförmigen Vorderabschnitt ein zylindrisches, konzentrisch zum Hinterabschnitt und zum Vorderabschnitt angeordnetes Leitrohr anschließt, dessen Innendurchmesser dem Durchmesser der Schneeaustrittsöffnung entspricht. Durch das Leitrohr, dessen Länge bevorzugt mindestens die halbe Länge des Vorderabschnitts beträgt, wird die Entmischung von Kohlendioxidschnee und Kohlendioxidgas verbessert und die Ausbeute an Kohlendioxidschnee erhöht.

Bevorzugt ist die erfindungsgemäße Vorrichtung so aufgebaut, dass die Gasabzugsleitung mit ihrer Gasaustrittsöffnung in Höhe des Übergangs von Hinterabschnitt zu Vorderabschnitt des Zyklons ausmündet. Dadurch ergibt sich ein Ringraum zwischen Gasabzugsleitung und Innenwand des Zyklons, der zumindest fast die gesamte Länge des Hinterabschnitts umfasst.

Eine besonders vorteilhafte Ausgestaltung der Erfindung sieht vor, dass die Breite des Ringraums zwischen der Außenwand der in den Hinterabschnitt des Zyklons hineinragenden kreiszylinderförmigen Gasabzugsleitung und der Innenwand des gleichfalls kreiszylinderförmigen Hinterabschnitts zwischen dem 0,1-fachen und dem 0,35-fachen des Innendurchmessers des Hinterabschnitts beträgt. Dabei gilt: Bei einer gegebenen Menge an zugeführtem flüssigem Kohlendioxid wird die Umlaufgeschwindigkeit des expandierenden Kohlendioxids und damit der Unterkühlungseffekt umso größer, je geringer die Breite des Ringraums ist. Unterschreitet die Breite des Ringraums jedoch eine gewisse Grenze, besteht die Gefahr, dass der Ringraum vom bei der Expansion des Kohlendioxids entstehenden Kohlendioxidschnee verstopft wird. Beispielsweise beträgt die Breite dieses Ringraums mindestens 15 mm, höchstens jedoch 50 mm, bei einem Innenradius des Hinterabschnitts von 75 mm.

In einer abermals vorteilhaften Ausgestaltung der Erfindung ist mindestens eine Zuführungsdüse vorgesehen, die tangential in den Hinterabschnitt, zusätzlich zur Kohlendioxid-Entspannungsdüse einmündet. Beispielsweise können bis zu sechs Zuführungsdüsen vorgesehen sein, die winklig zueinander versetzt, tangential in den Hinterabschnitt des Zyklons einmünden. Bei dieser zusätzlichen Zuführungsdüse bzw. diesen zusätzlichen Zuführungsdüsen handelt es sich beispielsweise um eine oder mehrere Kohlendioxid-Entspannungsdüsen, an denen Kohlendioxid in den Innenraum des Zyklons eingetragen werden kann. Dadurch wird insbesondere die im Zyklon erzeugte Kohlendioxid-Strömung beschleunigt und dadurch eine weiter verbesserte Abkühlung erzielt. Anstelle von Kohlendioxid können an der zusätzlichen Zuführdüse bzw. den zusätzlichen Zuführungsdüsen auch andere gasförmige, flüssige oder feste Substanzen eingetragen werden, die im Zyklon mit dem unterkühlten Kohlendioxid vermischt und durch dieses gekühlt werden.

Zweckmäßigerweise ist der Zyklon so gestaltet, dass eine Wand des Zyklons zumindest abschnittsweise als Wärmetauscherfläche fungiert, die mit der Druckleitung für das flüssige Kohlendioxid in Wärmekontakt steht. Dadurch kann die durch die Entspannung des Kohlendioxids im Innern des Zyklons entstehende Kälte zur Vorkühlung des flüssigen Kohlendioxids in der Druckleitung herangezogen werden. Beispielsweise wird dazu die Druckleitung in einer entlang der Außenwand des Zyklons verlaufenden Rohrschlange in einer oder mehreren Schleifen um den Zyklon herumgeführt, wobei in diesem Fall zwischen Rohrschlange und Zyklon eine gute Wärmeleitung bestehen sollte.

Bevorzugt wird ein Mengenstrom an flüssigem Kohlendioxid zwischen 100 kg/h und 2000 kg/h, besonders bevorzugt zwischen 200 kg/h und 1000 kg/h, bei einem Druck von erfindungsgemäß 10 bar und bevorzugt eine 20 bar, besonders bevorzugt zwischen 12 bar und 16 bar an der Entspannungsdüse eingetragen. Die Entspannungsdüse weist bevorzugt einen Innendurchmesser zwischen 1 mm und 4 mm auf. Der erzeugte unterkühlte Kohlendioxidschnee weist eine Temperatur von unter 190 K, bevorzugt unter 170 K auf.

Die erfindungsgemäße Vorrichtung wird bevorzugt zur Erzeugung von unterkühltem Kohlendioxidschnee verwendet, der zur Kühlung eines Produkts, insbesondere eines Lebensmittelprodukts eingesetzt wird. Der aus der Schneeaustrittsöffnung ausgetragene unterkühlte Kohlendioxidschnee wird dazu beispielsweise auf die Oberfläche des zu kühlenden Produkts ausgetragen, während das Kohlendioxidgas an der Gasabzugsleitung abgezogen und beispielsweise auch zur Vorkühlung des flüssigen Kohlendioxids in der Druckleitung eingesetzt werden kann; Im letzteren Fall wird dadurch die Ausbeute an Kohlendioxidschnee erhöht.

Anhand der Zeichnung soll ein Ausführungsbeispiel der Erfindung näher erläutert werden. In schematischen Ansichten zeigen:
Fig. 1: Eine erfindungsgemäße Vorrichtung in einer Schnittansicht längs der Linie I-I in Fig. 2,
Fig. 2: Die Vorrichtung aus Fig. 1 in einer Schnittansicht längs der Linie II-II in Fig. 1,
Fig. 3: Eine erfindungsgemäße Vorrichtung in einer anderen Ausführungsform in einer Schnittansicht.

Die in den Zeichnungen gezeigte Vorrichtung 1 zur Herstellung von unterkühltem Kohlendioxidschnee umfasst eine Entspannungsdüse 2 für Kohlendioxid, die an eine Druckleitung 3 zum Transportieren von druckverflüssigtem Kohlendioxid angeschlossen ist. Die Druckleitung 3 ist in hier nicht gezeigter Weise mit einem Tank für flüssiges Kohlendioxid strömungsverbunden, in dem flüssiges Kohlendioxid bei einem Druck von beispielsweise 18 bar bis 20 bar bevorratet wird. Ein Endabschnitt der Druckleitung 3, an dessen Stirnseite sich die Entspannungsdüse 2 befindet, ist innerhalb einer tangentialen Zuführung 4 eines Zyklons 5 und axial zu dieser angeordnet. Eine Flanschverbindung 6 sorgt für eine gasdichte Verbindung zwischen Druckleitung 3 und Zuführung 4.

Der Zyklon 5 umfasst in an sich bekannter Weise einen Hinterabschnitt 7 mit kreiszylinderförmigem Querschnitt und einen sich daran anschließenden Vorderabschnitt 8 in Form eines Kegelstumpfes, der in einer Schneeaustrittsöffnung 9 mit Öffnungsradius *R_{P}* ausmündet. Der Zyklon 5 ist aus einem schlecht wärmeleitenden Material, wie Edelstahl oder Aluminium, gefertigt und kann überdies, hier nicht gezeigt, mit einer thermisch isolierenden Hülle ausgerüstet sein. An die Schneeaustrittsöffnung 9 des Vorderabschnitts 8 schließt sich ein zylinderförmiges Leitrohr 10 an, deren Innendurchmesser dem Durchmesser der Schneeaustrittsöffnung 9 entspricht. Auf seiner dem Vorderabschnitt 8 entgegengesetzten Stirnseite ist der Hinterabschnitt 7 mit einem Boden 11 abgeschlossen. Eine zylinderförmige Gasabzugsrohr 12 mit Innenradius *R_{G}* , das in hier nicht gezeigter Weise an einer Gasabzugsleitung angeschlossen ist, durchsetzt den Boden 11, wodurch zwischen der Außenwand des Gasabzugsrohrs 12 und der Innenwand des Hinterabschnitts 7 ein Ringraum 13 besteht. Die im Wesentlichen kreissymmetrisch aufgebauten Elemente Hinterabschnitt 7, Vorderabschnitt 8, Leitrohr 10 und Gasabzugsrohr 12 sind an einer gemeinsamen Achse 14 angeordnet und aus einem Material mit niedriger Wärmeleitung, beispielsweise Edelstahl, gefertigt.

Der Innenradius *R_{G}* des Gasabzugsrohrs 12 ist bei der erfindungsgemäßen Vorrichtung 1 größer als der Radius *R_{P}* der Schneeaustrittsöffnung 9 der Vorderabschnitts 8. Gleichzeitig ist das Gasabzugsrohr 12 tief in das Innere des Zyklons 5 hineingeführt und endet mit einer Austrittsöffnung 15 ungefähr in Höhe der Ebene 16 des Übergangs zwischen Hinterabschnitt 7 und Vorderabschnitt 8 des Zyklons 5. Das Verhältnis zwischen der Breite B_{R} des Ringraums 13 zwischen Außenwand des Gasabzugsrohrs 12 und Innenwand des Hinterabschnitts 7 und dem Innenradius R_{Z} des Hinterabschnitts beträgt bevorzugt zwischen B_{R}/R_{Z} = 0,2 und B_{R}/R_{Z} = 0,7.

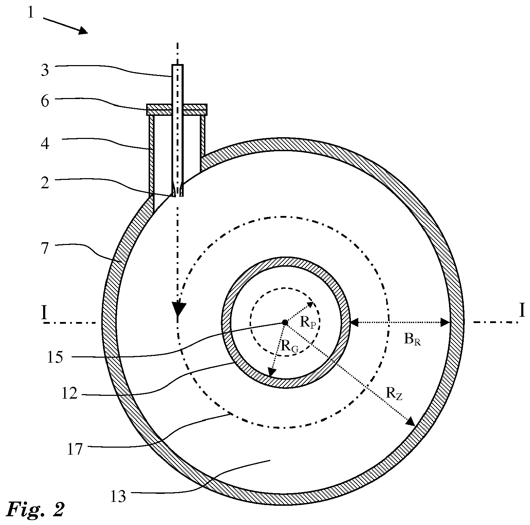

Beim Betrieb der Vorrichtung 1 strömt flüssiges Kohlendioxid über die Druckleitung 3 mit einem Druck von mehr als 5,18 bar (abs.), beispielsweise einem Druck zwischen 18 bis 20 bar (abs.), zur Entspannungsdüse 2 und entspannt dort unter Bildung eines Stroms aus Kohlendioxidgas und Kohlendioxidschnee, der tangential in den Ringraum zwischen der Innenwand des Hinterabschnitts 7 und der Außenwand des Gasabzugsrohrs 12 einströmt und dort auf eine in Richtung des Vorderabschnitts absinkende spiralförmige Bahn 17 gezwungen wird, wie in Fig. 2 angedeutet. In an sich bekannter Weise transformiert die spiralförmige Bahn auf Höhe der Austrittsöffnung 15 in eine innerhalb des Gasabzugsrohrs 12 aufsteigende Spiralbahn. Durch die kreisförmigen Strömungen werden die Kohlendioxidpartikel spätestens nach einigen Umdrehungen aufgrund der Fliehkraft an die Kegelwände geschleudert und soweit abgebremst, dass sie sich aus der Strömung lösen und nach unten in Richtung der Leitrohr 10 rieseln. Von dort werden sie beispielsweise auf die Oberfläche eines zu kühlenden Gegenstandes aufgetragen oder in eine zu kühlende Masse eingemischt. Das am Gasaustritt 12 entweichende gasförmige Kohlendioxid wird bevorzugt aufgefangen und beispielsweise zur Vorkühlung des flüssigen Kohlendioxids in der Druckleitung 3 eingesetzt.

Die durch das Leitrohr 10 rieselnden Kohlendioxidpartikel sind von sehr feiner Konsistenz und weisen nahezu keine Agglomerate auf. Zugleich sind sie unterkühlt, liegen also bei einer Temperatur unterhalb der Temperatur sublimierenden Kohlendioxids bei Atmosphärendruck (-78,9°C; 194 K) vor. Gleichzeitig ist die Temperatur des durch das Gasabzugsrohr strömenden Kohlendioxidgases gegenüber der Temperatur sublimierenden Kohlendioxids bei Atmosphärendruck erhöht.

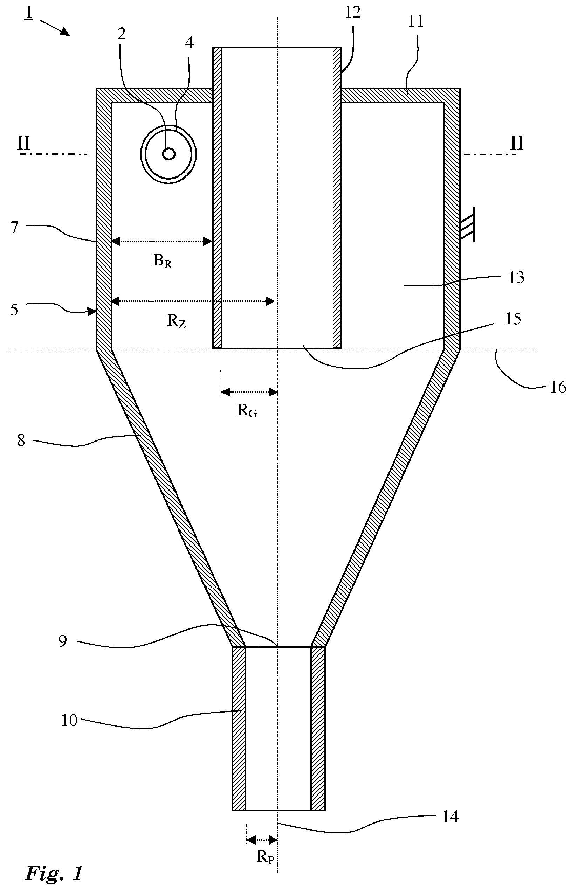

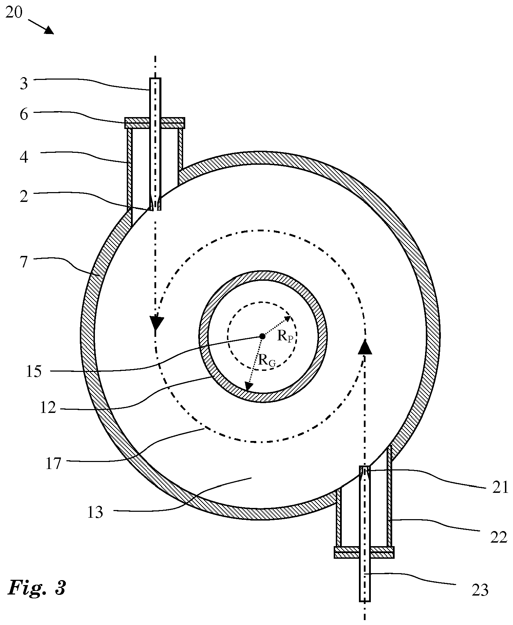

Die in Fig. 3 gezeigte Ausgestaltung einer erfindungsgemäßen Vorrichtung 20 unterscheidet sich von der in Fig. 1 und Fig. 2 gezeigten Vorrichtung 1 lediglich dadurch, dass in den Hinterabschnitt 7 des Zyklons 5 zusätzlich zur Entspannungsdüse 2 einen weitere Zuführungsdüse 21 tangential einmündet. Die Zuführungsdüse 21 ist - ähnlich der Entspannungsdüse 2 - an der Stirnseite einer innerhalb einer tangentialen Zuführung 22 ausmündenden Druckzuleitung 23 angeordnet. Die übrigen Elemente der Vorrichtung 20 sind entsprechend der Vorrichtung 1 aufgebaut und weisen daher die gleichen Bezugszeichen auf. Bei der Zuführungsdüse 21 handelt es sich beispielsweise um eine Entspannungsdüse, mittels der dem Zyklon 5 Kohledioxid zugeführt werden kann. In diesem Falle summieren sich die aus den Entspannungsdüsen 2 und 21 austretenden Kohlendioxidströme im Innern des Zyklons 5 und sorgen für eine hohe Geschwindigkeit des im Zyklon 5 umlaufenden Kohlendioxids. Es ist jedoch im Rahmen der Erfindung auch vorstellbar, eine andere Substanz über die Zuführungsdüse 21 einzubringen, beispielsweise ein gasförmiger, flüssiger oder fester Stoff, der sich innig mit dem aus der Druckzuleitung 3 herangeführten Kohlendioxid im Zyklon 5 durchmischt und dadurch gekühlt wird. Im Übrigen können zusätzlich zur Zuführdüse 21 weitere, beispielsweise 2 bis 4 zusätzliche Zuführdüsen vorgesehen sein, mittels denen Kohlendioxid oder weitere Substanzen in den Zyklon 5 eingebracht werden können.

Anstelle des in den Zeichnungen gezeigten Ausführungsformen, bei denen der Zyklon 5 mit einer Wärmeisolation ausgerüstet ist, kann die im Zyklon 5 herrschende Kälte auf zur Vorkühlung des in der Druckleitung 3 herangeführten flüssigen Kohlendioxids eingesetzt werden. In diesem Fall wird beispielsweise die Druckleitung 3 in Schleifen um den Zyklon 5 herumgeführt und auf eine gute thermische Verbindung zwischen der Wand des Zyklons 5 und der Druckleitung 3 geachtet. In diesem Fall ist der Zyklon 5 zumindest in dem Bereich, in dem er mit der Druckleitung in Kontakt kommt, aus einem Material guter Wärmeleitung gefertigt.

### Beispiel:

Eine erfindungsgemäße Vorrichtung umfasst einen Zyklon 1, dessen zylindrischer Hinterabschnitt 7 im Bereich der Entspannungsdüse 2 eine Innendurchmesser von ca. 30cm und eine Länge, gemessen zwischen oberer Stirnseite und der Schneeaustrittsöffnung 10, von ca. 60cm. Die Entspannungsdüse 2 hat einen Durchmesser von ca. 2 mm. An der Entspannungsdüse 2 wird flüssiges Kohlendioxid mit einem Druck von 18 bar und einem Mengenstrom zwischen 500 und 2000 kg/h eingetragen. Am Leitrohr, dessen Länge dem des Vorderabschnitts 8 entspricht, tritt Kohlendioxidschnee mit einem Anteil von unter 10% Kohlendioxidgas aus. Der Kohlendioxidschnee besitzt eine Temperatur zwischen ca. minus 85°C und minus 105°C (188 bis173 K). Zugleich besitzt der am Gasabzugsrohr abgezogene Gasstrom eine Temperatur zwischen ca. minus 30°C und minus 45°C (228 K bis 239 K).

### Bezugszeichenliste

- 1.: Vorrichtung
- 2.: Entspannungsdüse
- 3.: Druckzuleitung
- 4.: Zuführung
- 5.: Zyklon
- 6.: Flanschverbindung
- 7.: Hinterabschnitt
- 8.: Vorderabschnitt
- 9.: Schneeaustrittsöffnung
- 10.: Leitrohr
- 11.: Boden
- 12.: Gasabzugsrohr
- 13.: Ringraum
- 14.: Achse
- 15.: Austrittsöffnung
- 16.: Ebene
- 17.: Bahn
- 18.: -
- 19.: -
- 20.: Vorrichtung
- 21.: Zuführungsdüse
- 22.: Zuführung
- 23.: Druckzuleitung

- B_{Z}: Breite des Ringspalts
- R_{P}: Innenradius der Schneeaustrittsöffnung 9
- R_{G}: Innenradius Gasableitung
- R_{Z}: Innenradius Hinterabschnitt des Zyklons

## Patentansprüche

1. Verfahren zur Erzeugung von unterkühltem Kohlendioxidschnee unter Verwendung eines Zyklons, der einen kreiszylinderförmigen Hinterabschnitt (7) und einen sich daran anschließenden, kegelstumpfförmigen Vorderabschnitt (8) aufweist, wobei auf der vom Vorderabschnitt (8) entgegengesetzten oberen Stirnseite des Hinterabschnitts (7) ein Boden (11) mit einer durch diesen konzentrisch hindurchgeführten, im Innern des Zyklons (5) beabstandet vom Boden (11) mit einer kreisförmigen Gasaustrittsöffnung (15) ausmündenden Gasabzugsleitung (12) angeordnet ist und der Vorderabschnitt (8) auf seiner vom Hinterabschnitt (7) abgewandten Stirnseite in einer konzentrisch angeordneten Schneeaustrittsöffnung (9) ausmündet, und einer an einer Druckleitung (3) für flüssiges Kohlendioxid angeschlossenem Kohlendioxid-Entspannungsdüse (2), die tangential in den Hinterabschnitt (7) im Bereich der oberen Stirnseite des Hinterabschnitts (7) einmündet, wobei flüssiges Kohlendioxid an der Entspannungsdüse (2) in eine Entspannungskammer eingeleitet wird, wo es unter Entstehung eines Gemisches von Kohlendioxidgas und Kohlendioxidschnee entspannt wird, und anschließend das Gemisch in eine überwiegend aus Kohlendioxidschnee sowie eine überwiegend aus Kohlendioxidgas bestehende Phase getrennt wird, wobei als Entspannungskammer der Ringraum (13) des Zyklons (5) im Bereich von dessen Gasabzugsleitung (12) zum Einsatz kommt, und wobei das flüssige Kohlendioxid bei einem Druck von mindestens 10 bar herangeführt und an der Entspannungsdüse (2) entspannt wird,
**dadurch gekennzeichnet,**
**dass** der Innenradius der Gasaustrittsöffnung (15) größer als der Innenradius der Schneeaustrittsöffnung (9) ist und der bei der Entspannung des flüssigen Kohlendioxids erzeugte Strom aus Kohlendioxidschnee und Kohlendioxidgas tangential in den Ringraum (13) eingetragen und aus dem Bereich der Entspannungsdüse (2) mit möglichst hoher Geschwindigkeit abgeleitet wird, sodass durch die bei der Entspannung des flüssigen Kohlendioxids erzeugte Strömung in der Entspannungskammer zumindest im Bereich der Mündung der Entspannungsdüse (2) ein Bereich mit Unterdruck mit einem Wert von unter 0,9 bar erzeugt wird, in den hinein das flüssige Kohlendioxid entspannt wird und dadurch unterkühlt wird.

2. Verfahren nach Anspruch 1, **dadurch gekennzeichnet, dass** im Bereich der Entspannungsdüse ein Druck von weniger als 0,6 bar, besonders bevorzugt von weniger als 0,1 bar erzeugt wird.

3. Verfahren nach Anspruch 1 oder 2, **dadurch gekennzeichnet, dass** ein Mengenstrom an flüssigem Kohlendioxid zwischen 100 kg/h und 2000 kg/h, bei einem Druck zwischen 10 bar und 20 bar an der Entspannungsdüse eingetragen wird.

4. Vorrichtung zur Durchführung des Verfahrens nach einem der vorhergehenden Ansprüche, mit einem Zyklon (5), der einen kreiszylinderförmigen Hinterabschnitt (7) und einen sich daran anschließenden, kegelstumpfförmigen Vorderabschnitt (8) aufweist, wobei auf der vom Vorderabschnitt (8) entgegengesetzten oberen Stirnseite des Hinterabschnitts (7) ein Boden (11) mit einer durch diesen konzentrisch hindurchgeführten, im Innern des Zyklons (5) beabstandet vom Boden (11) mit einer kreisförmigen Gasaustrittsöffnung (15) ausmündenden Gasabzugsleitung (12) angeordnet ist und der Vorderabschnitt (8) auf seiner vom Hinterabschnitt (7) abgewandten Stirnseite in einer konzentrisch angeordneten Schneeaustrittsöffnung (9) ausmündet, und mit einer an einer Druckleitung (3) für flüssiges Kohlendioxid angeschlossenem Kohlendioxid-Entspannungsdüse (2), die tangential in den Hinterabschnitt (7) im Bereich der oberen Stirnseite einmündet,
**dadurch gekennzeichnet,**
**dass** der Durchmesser der Gasaustrittsöffnung (15) kleiner als der Innendurchmesser des Hinterabschnitts (7), jedoch mindestens 5%, bevorzugt mindestens 10% größer als der Durchmesser der Schneeaustrittsöffnung (9) des Vorderabschnitts (8) ist und die Kohlendioxid-Entspannungsdüse (2) eine Düsenöffnung aufweist, die stirnseitig an einem tangential in den Hinterabschnitt (7) des Zyklons (5) einmündenden Endabschnitt der Druckleitung (3) angeordnet ist.

5. Vorrichtung nach Anspruch 4, **dadurch gekennzeichnet, dass** sich an den kegelstumpfförmigen Vorderabschnitt (8) ein zylindrisches, konzentrisch zum Vorderabschnitt (8) angeordnetes Leitrohr (10) anschließt, dessen Innendurchmesser dem Durchmesser der Schneeaustrittsöffnung (9) entspricht.

6. Vorrichtung nach einem der Ansprüche 4 oder 5, **dadurch gekennzeichnet, dass** die Gasabzugsleitung (12) mit ihrer Gasaustrittsöffnung (15) in Höhe des Übergangs von Hinterabschnitt (7) zu Vorderabschnitt (8) im Zyklon (5) ausmündet.

7. Vorrichtung nach einem der Ansprüche 4 bis 6 , **dadurch gekennzeichnet, dass** die Breite des Ringraums zwischen der Außenwand der Gasabzugsleitung (12) und der Innenwand des Hinterabschnitts (7) zwischen dem 0,1-fachen und dem 0,35-fachen des Innendurchmessers des Hinterabschnitts (7) beträgt.

8. Vorrichtung nach einem der Ansprüche 4 bis 7 , **dadurch gekennzeichnet, dass** mindestens eine Zuführungsdüse vorgesehen ist, die tangential in den Hinterabschnitt (7), zusätzlich zur Kohlendioxid-Entspannungsdüse einmündet.

9. Vorrichtung nach einem der Ansprüche 4 bis 8 , **dadurch gekennzeichnet, dass** eine Wand des Zyklons (5) zumindest abschnittsweise als Wärmetauscherfläche fungiert, die mit der Druckleitung (3) für das flüssige Kohlendioxid in Wärmekontakt steht.

## Claims

1. Method of generating supercooled carbon dioxide snow using a cyclone having a cylindrical rear section (7) and a connected frustoconical front section (8), where there is disposed at the upper end face of the rear section (7), at the opposite end from the front section (8), a plate (11) having a gas outlet conduit (12) which is conducted concentrically therethrough and opens out with a circular gas exit opening (15) within the cyclone (5) and at a distance from the plate (11), and the front section (8) at its end face remote from the rear section (7) opens out in a concentric snow exit opening (9), and having a carbon dioxide expansion nozzle (2) which is connected to a pressure conduit (3) for liquid carbon dioxide and opens out tangentially into the rear section (7) in the region of the upper end face of the rear section (7), where liquid carbon dioxide is introduced into an expansion chamber at the expansion nozzle (2), where it is expanded to form a mixture of carbon dioxide gas and carbon dioxide snow, and then the mixture is separated into a phase consisting predominantly of carbon dioxide snow and a phase consisting predominantly of carbon dioxide gas, where the expansion chamber used is the ring space (13) of the cyclone (5) in the region of the gas outlet conduit (12) thereof, and where the liquid carbon dioxide is introduced and expanded at the expansion nozzle (2) at a pressure of at least 10 bar,
**characterized in that**
the inner radius of the gas exit opening (15) is greater than the inner radius of the snow exit opening (9)
and the stream of carbon dioxide snow and carbon dioxide gas generated in the expansion of the liquid carbon dioxide is introduced tangentially into the ring space (13) and discharged from the region of the expansion nozzle (2) at maximum velocity, such that the flow generated in the expansion of the liquid carbon dioxide in the expansion chamber, at least in the region of the mouth of the expansion nozzle (2), generates a reduced-pressure region with a value below 0.9 bar into which the liquid carbon dioxide is expanded and hence supercooled.

2. Method according to Claim 1, **characterized in that** a pressure of less than 0.6 bar, more preferably of less than 0.1 bar, is generated in the region of the expansion nozzle.

3. Method according to Claim 1 or 2, **characterized in that** a mass flow rate of liquid carbon dioxide of between 100 kg/h and 2000 kg/h, at a pressure between 10 bar in 20 bar, is introduced at the expansion nozzle.

4. Apparatus for performing the method according to any of the preceding claims, having a cyclone (5) having a cylindrical rear section (7) and a connected frustoconical front section (8), where there is disposed at the upper end face of the rear section (7), at the opposite end from the front section (8), a plate (11) having a gas outlet conduit (12) which is conducted concentrically therethrough and opens out with a circular gas exit opening (15) within the cyclone (5) and at a distance from the plate (11), and the front section (8) at its end face remote from the rear section (7) opens out in a concentric snow exit opening (9), and having a carbon dioxide expansion nozzle (2) which is connected to a pressure conduit (3) for liquid carbon dioxide and opens out tangentially into the rear section (7) in the region of the upper end face,
**characterized in that**
the diameter of the gas exit opening (15) is less than the internal diameter of the rear section (7), but at least 5%, preferably at least 10%, greater than the diameter of the snow exit opening (9) of the front section (8), and the carbon dioxide expansion nozzle (2) has a nozzle opening disposed at the end face of an end section of the pressure conduit (3) that opens tangentially into the rear section (7) of the cyclone (5).

5. Apparatus according to Claim 4, **characterized in that** connected to the frustoconical front section (8) is a cylindrical guide tube (10) which is in a concentric arrangement with respect to the front section (8) and which has an internal diameter corresponding to the diameter of the snow exit opening (9).

6. Apparatus according to either of Claims 4 and 5, **characterized in that** the gas outlet conduit (12) opens out with its gas exit opening (15) at the level of the transition from front section (7) to rear section (8) in the cyclone (5).

7. Apparatus according to any of Claims 4 to 6, **characterized in that** the width of the ring space between the outer wall of the gas outlet conduit (12) and the inner wall of the rear section (7) is between 0.1 times and 0.35 times the internal diameter of the rear section (7) .

8. Apparatus according to any of Claims 4 to 7, **characterized in that** at least one feed nozzle that opens tangentially into the rear section (7), in addition to the carbon dioxide expansion nozzle, is provided.

9. Apparatus according to any of Claims 4 to 8, **characterized in that** a wall of the cyclone (5) functions, at least in sections, as a heat exchange surface in thermal contact with the pressure conduit (3) for the liquid carbon dioxide.

## Revendications

1. Procédé de production de neige carbonique sous-refroidie en utilisant un cyclone, qui présente une section arrière (7) en forme de cylindre circulaire et une section avant (8) de forme tronconique s'y raccordant, sur le côté frontal supérieur de la section arrière (7), opposé à la section avant (8), étant agencé un fond (11) avec une conduite d'évacuation de gaz (12) traversant celui-ci de manière concentrique, débouchant à l'intérieur du cyclone (5) à distance du fond (11) avec une ouverture de sortie de gaz (15) de forme circulaire, et la section avant (8) débouchant, sur son côté frontal détourné de la section arrière (7), dans une ouverture de sortie de neige (9) agencée de manière concentrique, et une buse de détente de dioxyde de carbone (2) raccordée à une conduite sous pression (3) pour le dioxyde de carbone liquide, qui débouche tangentiellement dans la section arrière (7) dans la zone du côté frontal supérieur de la section arrière (7), le dioxyde de carbone liquide étant introduit au niveau de la buse de détente (2) dans une chambre de détente, où il est détendu en formant un mélange de gaz carbonique et de neige carbonique, et ensuite le mélange est séparé en une phase constituée principalement de neige carbonique ainsi qu'en une phase constituée principalement de gaz carbonique, l'espace annulaire (13) du cyclone (5) dans la zone de sa conduite d'évacuation de gaz (12) étant utilisé en tant que chambre de détente, et le dioxyde de carbone liquide étant amené à une pression d'au moins 10 bar et étant détendu au niveau de la buse de détente (2),
**caractérisé en ce que**
le rayon intérieur de l'ouverture de sortie de gaz (15) est supérieur au rayon intérieur de l'ouverture de sortie de neige (9),
et le courant de neige carbonique et de gaz carbonique produit lors de la détente du dioxyde de carbone liquide est introduit tangentiellement dans l'espace annulaire (13) et évacué de la zone de la buse de détente (2) à une vitesse aussi élevée que possible, de telle sorte que l'écoulement produit lors de la détente du dioxyde de carbone liquide produit dans la chambre de détente, au moins dans la zone de l'embouchure de la buse de détente (2), une zone de dépression d'une valeur inférieure à 0,9 bar, dans laquelle le dioxyde de carbone liquide est détendu et ainsi sous-refroidi.

2. Procédé selon la revendication 1, **caractérisé en ce qu'**une pression inférieure à 0,6 bar, de manière particulièrement préférée inférieure à 0,1 bar, est produite dans la zone de la buse de détente.

3. Procédé selon la revendication 1 ou 2, **caractérisé en ce qu'**un débit de dioxyde de carbone liquide compris entre 100 kg/h et 2 000 kg/h est introduit à une pression comprise entre 10 bar et 20 bar au niveau de la buse de détente.

4. Dispositif pour la réalisation du procédé selon l'une quelconque des revendications précédentes, avec un cyclone (5) qui présente une section arrière (7) en forme de cylindre circulaire et une section avant (8) de forme tronconique s'y raccordant, sur le côté frontal supérieur de la section arrière (7), opposé à la section avant (8), étant agencé un fond (11) avec une conduite d'évacuation de gaz (12) traversant celui-ci de manière concentrique, débouchant à l'intérieur du cyclone (5) à distance du fond (11) avec une ouverture de sortie de gaz (15) de forme circulaire, et la section avant (8) débouchant, sur son côté frontal détourné de la section arrière (7), dans une ouverture de sortie de neige (9) agencée de manière concentrique, et avec une buse de détente de dioxyde de carbone (2) raccordée à une conduite sous pression (3) pour le dioxyde de carbone liquide, qui s'ouvre tangentiellement dans la section arrière (7) dans la zone du côté frontal supérieur,
**caractérisé en ce que**
le diamètre de l'ouverture de sortie de gaz (15) est inférieur au diamètre intérieur de la section arrière (7), mais est supérieur d'au moins 5 %, de préférence d'au moins 10 %, au diamètre de l'ouverture de sortie de neige (9) de la section avant (8), et la buse de détente de dioxyde de carbone (2) présente une ouverture de buse qui est agencée du côté frontal sur une section d'extrémité de la conduite sous pression (3) débouchant tangentiellement dans la section arrière (7) du cyclone (5) .

5. Dispositif selon la revendication 4, **caractérisé en ce que** la section avant de forme tronconique (8) est suivie d'un tube de guidage cylindrique (10) agencé concentriquement à la section avant (8), dont le diamètre intérieur correspond au diamètre de l'ouverture de sortie de neige (9).

6. Dispositif selon l'une quelconque des revendications 4 ou 5, **caractérisé en ce que** la conduite d'évacuation de gaz (12) débouche avec son ouverture de sortie de gaz (15) à hauteur de la transition entre la section arrière (7) et la section avant (8) dans le cyclone (5).

7. Dispositif selon l'une quelconque des revendications 4 à 6, **caractérisé en ce que** la largeur de l'espace annulaire entre la paroi extérieure de la conduite d'évacuation de gaz (12) et la paroi intérieure de la section arrière (7) est comprise entre 0,1 fois et 0,35 fois le diamètre intérieur de la section arrière (7) .

8. Dispositif selon l'une quelconque des revendications 4 à 7, **caractérisé en ce qu'**au moins une buse d'amenée est prévue, qui débouche tangentiellement dans la section arrière (7) en plus de la buse de détente de dioxyde de carbone.

9. Dispositif selon l'une quelconque des revendications 4 à 8, **caractérisé en ce qu'**une paroi du cyclone (5) sert, au moins par sections, de surface d'échange de chaleur qui est en contact thermique avec la conduite sous pression (3) pour le dioxyde de carbone liquide.
